# EUROPÄISCHE PATENTSCHRIFT

(11) **EP 1 318 902 B1**
(45) Veröffentlichungstag und Bekanntmachung des Hinweises auf die Patenterteilung: **18.05.2005**
(21) Anmeldenummer: 01978322.4
(22) Anmeldetag: 30.08.2001
(51) Int. Cl.: B29B 9/08, B29B 9/12

(54) **VERFAHREN ZUR HERSTELLUNG EINES GRANULATFÖRMIGEN ZWISCHENPRODUKTES FÜR DIE WEITERVERARBEITUNG ZU KUNSTSTOFF-FORMKÖRPERN**
METHOD FOR PRODUCING A GRANULATED INTERMEDIATE PRODUCT THAT IS TO BE SUBJECTED TO A SUBSEQUENT PROCESSING IN ORDER TO FORM PLASTIC SHAPED BODIES
PROCEDE DE FABRICATION D'UN PRODUIT INTERMEDIAIRE GRANULE, DESTINE A ETRE TRAITE ULTERIEUREMENT POUR FORMER DES CORPS FACONNES EN PLASTIQUE

(30) Priorität: 15.09.2000 DE 10045794
(43) Veröffentlichungstag der Anmeldung: 18.06.2003
(73) Patentinhaber: Fraunhofer-Gesellschaft zur Förderung der angewandten Forschung e.V., 80686 München (DE); Tecnaro Gesellschaft zur Industriellen Anwendung Nachwachsender Rohstoffe mbH, 99817 Eisenach (DE)
(72) Erfinder: EYERER, Peter, 76228 Karlsruhe (DE); INONE, Emilia, 76327 Pfinztal (DE); NÄGELE, Helmut, 99819 Beuernfeld (DE); EISENREICH, Norbert, 76327 Pfinztal (DE); ECKL, Wilhelm, 76228 Karlsruhe (DE); PFITZER, Jürgen, 99817 Stockhausen (DE)
(86) Internationale Anmeldenummer: PCT/EP2001/010006
(87) Internationale Veröffentlichungsnummer: WO 2002/022335

(56) Entgegenhaltungen:
- EP-A- 0 152 107
- EP-A- 0 655 310
- EP-A- 0 718 081
- EP-A- 0 904 908
- EP-A- 1 120 436
- DE-A- 1 778 230
- ROY A ROBINSON: "Pelleting - The Uses Expand" COMPRESSED AIR, COMPRESSED AIR MAGAZINE CO. PHILLIPSBURG, US, Bd. 87, Nr. 11, 1. November 1982 (1982-11-01), Seiten 34-37, XP002089271 ISSN: 0010-4426

## Beschreibung

Die Erfindung betrifft ein Verfahren zur Herstellung eines granulatförmigen Zwischenproduktes aus wenigstens einem im wesentlichen pulver- oder partikelförmigen thermoplastischen und/oder thermoelastischen Polymer und im wesentlichen inerten Füllstoffen für die Weiterverarbeitung zu Kunststoff-Formkörpern durch thermoplastische Verarbeitungsverfahren, indem das Polymer und die Füllstoffe gemischt und die Pulvermischung zu einem Granulat mit größerer Korngröße kompaktiert wird.

Thermoplastische und thermoelastische Polymere werden meist in Granulatform auf Spritzgießmaschinen oder Extrudern zu Formkörpern verarbeitet. Hierzu muß zunächst das Polymer vom Rohstoffhersteller in die rieselfähige Granulatform gebracht werden, damit es anschließend prozeßsicher verarbeitet werden kann. Die Granulierung erfolgt ebenfalls auf Extrudern durch Aufschmelzen des Polymers und anschließendes Formen und Abkühlen des erzeugten Granulates. Dieser Prozeß verbraucht Energie und erfordert eine sorgfältige Temperatursteuerung, um die Molekularstruktur des Polymers nicht zu schädigen. Bei der Verarbeitung zum Formkörper wird das Granulat erneut aufgeschmolzen und wiederum thermisch beansprucht. Gleiches gilt bei der Verwendung von Kunststoff-Regeneraten. Hierbei werden die Kunststoffpartikel in der Regel zu kleineren Bruchstücken gemahlen und hieraus wiederum durch Umschmelzen ein Granulat erzeugt.

Um die Werkstoffeigenschaften des Endprodukts in der gewünschten Richtung zu beeinflussen, werden entweder bei der Herstellung des Rohgranulates oder bei dessen Aufschmelzen anläßlich der Herstellung des Formkörpers Fasermaterialien in kurzgeschnittener bis pulverförmiger Konsistenz zugesetzt. Bei der herkömmlichen Extrusion zum Rohgranulat bzw. des Rohgranulates zum Formkörper sind Faserfüllgrade bis zu maximal 65 Mass.-% zu erreichen, wobei insbesondere im Falle des Einsatzes von Naturfasern die Gefahr einer thermischen Beeinträchtigung derselben besteht, da die Fasern einerseits bei der Plastifizierung des Polymers anläßlich der Granulierung, andererseits bei der Weiterverarbeitung des Granulates zu dem Formkörper thermischer Belastung ausgesetzt sind.

Die DE 198 34 132 A1 beschreibt eine Vorrichtung zur Herstellung eines granulatartigen Zwischenproduktes aus thermoplastischen Polymeren und Naturfasern in Form einer Matrizenpresse. Die Matrizenpresse weist einen axial mit der zu granulierenden Pulvermischung beaufschlagbaren Ringraum auf, der an seinem Umfang von einer Lochmatrize begrenzt ist und in welchem ein umlaufender Reibflügel angeordnet ist, um das Aufgabegut durch die Lochmatrize zu pressen. Der zwischen dem Reibflügel und der Außenwandung des Ringraums gebildete Zwischenraum dient als Plastifizierkammer für das aufgegebene Polymer. Die bekannte Vorrichtung gewährleistet eine Variation der auf die Pulvermischung einwirkenden Scherkräfte und somit stets eine gleichmäßige Verteilung der Fasern in dem Plastifikat. Ferner soll aufgrund der verhältnismäßig klein ausgestalteten, geschlossenen Plastifizierkammer eine exakte Temperierung derselben möglich sein und die thermische Beeinträchtigung der Fasern möglichst gering gehalten werden. Gleichwohl besteht aufgrund der mindestens zweimaligen Plastifizierung der Pulvermischung, nämlich einerseits bei der Granulierung, andererseits bei der Weiterverarbeitung zu Formkörpern, die Gefahr einer thermischen Beeinträchtigung sowohl der eingesetzten Polymere als auch insbesondere der beigemischten Fasern.

Der DE 34 05 185 C2 ist eine weitere Matrizenpresse zur Herstellung eines Granulates aus mit Additiven versetzten Polymeren entnehmbar. Die Matrize ist mit einer temperierbaren Lochplatte ausgestattet, durch welche die Ausgangsmischung unter zumindest teilweisem Plastifizieren derselben durchgepreßt wird. Eine der Matrize zugeordnete Heiz- und Kühleinrichtung dient einerseits zum Erwärmen der Lochplatte vor Inbetriebnahme der Matrizenpresse auf eine Betriebstemperatur zwischen 100°C und 200°C, andererseits zum Abführen der entstehenden Reibungswärme bei fortwährendem Betrieb, um eine Überhitzung der mit der Ausgangsmischung in Kontakt stehenden Plattenoberseite zu vermeiden und eine einwandfreie Mischung des feinpartikulären Polymers mit den pulverförmigen Additiven vor der eigentlichen Agglomeration zu gewährleisten. Ferner soll ein Festbrennen oder Aufschmelzen des Kunststoffs an der Matrizenplatte vermieden werden. Folglich wird auch hier die Gefahr einer thermischen Beeinträchtigung der Ausgangsmischung zwar vermindert, nicht aber zuverlässig vermieden.

Der Erfindung liegt die Aufgabe zugrunde, ein kostensparendes Verfahren der eingangs genannten Art vorzuschlagen, bei dem unter zuverlässiger Vermeidung einer thermischen Beeinträchtigung der Pulvermischung höhere Füllgrade erreicht werden können.

Diese Aufgabe wird erfindungsgemäß mit einem Verfahren nach Anspruch 1 gelöst.

In EP718081 wird mit erhöhter Temperatur verfahren, siehe Spalte 4, Zeile 11, und eine nachträgliche Kühlung ist notwendig.

In EP904908 wird mit erheblich erhöhter Temperatur verfahren, so daß die Randbereiche des Polymers aufschmelzen, siehe die Zusammenfassung.

Die DE1778230 beschreibt eine Kompaktierung nicht und die gegenwärtig beanspruchten Temperaturen sind auch nicht vorgeschlagen.

Die EP152107 offenbart eine starke Erwärmung des Material, siehe Anspruch 4

Die EP655310 beschreibt eine Kompaktierung nicht und die gegenwärtig beanspruchten Temperaturen sind auch nicht vorgeschlagen.

Viele Polymere fallen anläßlich ihrer Herstellung in Pulver- oder Partikelform an. Dies gilt sowohl für die synthetische Herstellung als auch für das Regenerieren von Kunststoffen. Ähnlich verhält es sich bei natürlichen Polymeren, z. B. Lignin, das in der Zellstoffproduktion durch Eindampfen von Celluloseabwässern in feinpartikulärer Form erhalten wird. Das erfindungsgemäße Verfahren geht von dieser Pulver- oder Partikelform der Polymere aus. Diesem Polymerpulver werden die gewünschten Faserstoffe in entsprechend kleiner Partikelgröße (kurzgeschnitten bis mehlig) zugegeben und homogen untergemischt. Die erhaltene homogene Pulvermischung wird anschließend ohne Plastifizieren derselben ausschließlich unter mechanischem Druck kompaktiert und zu Agglomeraten mit gegenüber den Ausgangsprodukten nennenswert größerer Korngröße kompaktiert.

Überraschenderweise haben praktische Versuche gezeigt, daß solchermaßen hergestellte Agglomerate ausreichend formstabil und abriebfest sind, um als rieselfähiges Zwischenprodukt gefördert, verpackt und dosiert und in der herkömmlichen Weise durch beliebige thermoplastische Verarbeitungsverfahren, wie Extrudieren, Spritzgießen oder dergleichen, zu Kunststoff-Formkörpern verarbeitet werden zu können. Dabei können die Agglomerate als Masterbatch ungefüllten Polymeren zugesetzt oder direkt zu Formkörpern verarbeitet werden. Praktische Untersuchungen haben ferner gezeigt, daß sich mit dieser Preßagglomeration erheblich höhere Füllgrade an Füllstoffen, insbesondere faserförmigen Füllstoffen erreichen lassen, die einen Massenanteil bis zu 95% bezogen auf die eingesetzte Pulvermischung einnehmen können, ohne daß die Bindung im Polymer nennenswert beeinträchtigt wird. Mit dem erfindungsgemäßen Verfahren ist es insbesondere möglich, beliebige synthetische thermoplastische oder thermoelastische Polymere, wie Polyethylen, Polypropylen etc., mit hohen Anteilen von Naturfasern zu füllen, was mit einer erheblichen Kostenersparnis durch Substitution eines größeren Anteils der in der Regel teureren Polymere durch Fasern verbunden ist. Mit den herkömmlichen Verfahren lassen sich hingegen Füllgrade nur bis maximal 65 Mass.-% verwirklichen.

Vorzugsweise wird die Pulvermischung mit einer Linienkraft zwischen 5 kN/cm und 30 kN/cm kompaktiert. Solche Drucke lassen sich problemlos in Formpressen, Schnecken- oder Walzenpressen verwirklichen, wodurch geformte Agglomerate erhalten werden, ohne diese zu plastifizieren.

Beim kontinuierlichen Schnecken- oder Walzenpressen läßt sich das erhaltene Material je nach Konsistenz durch einfache Zerkleinerungsvorgänge zu der gewünschten Partikelgröße zerteilen. Statt dessen kann die Pulvermischung auch mittels Formwalzen zu geformten Agglomeraten kompaktiert werden. Eine andere Möglichkeit besteht darin, die Pulvermischung mittels einer Schneckenpresse zu einem - gegebenenfalls profilierten - Strang zu kompaktieren und den Strang zu den Agglomeraten gewünschter Partikelgröße zu zerteilen.

Je nach der zur mechanischen Kompaktierung eingesetzten Vorrichtung kann es insbesondere bei Scherbeanspruchung der Pulvermischung aufgrund entstehender Reibungswärme vonnöten sein, die Pulvermischung während des Kompaktierens zu kühlen, was beispielsweise durch Kühlung der mit der Pulvermischung in Kontakt stehenden Maschinenteile geschehen kann. Um jegliche auch nur oberflächige Plastifizierung der eingesetzten Polymere sicher und zuverlässig zu vermeiden, muß die Pulvermischung auf höchstens 40°C gehalten werden. Im Falle des bevorzugten Einsatzes von Walzen bzw. Formwalzen ist insbesondere bei offener Anordnung derselben eine Kühlung in der Regel entbehrlich. Vorteilhaft ist hier die Verwendung von Walzen aus einem Material mit verhältnismäßig hohem Wärmeleitkoeffizient, z.B. Metallen oder Metallegierungen, da die im Vergleich mit Matrizenpressen aufgrund geringerer Scherkräfte ohnehin nur geringe Reibungswärme dann stetig abgeführt wird.

Das Fasermaterial wird dem Polymerpulver vorzugsweise mit einer Partikelgröße zwischen 10 µm und 10.000 µm zugesetzt.

Die Pulvermischung wird vorteilhafterweise zu Agglomeraten mit einer Partikelgröße zwischen 1 mm bis 10 mm kompaktiert.

Vorzugsweise wird die Pulvermischung im wesentlichen trokken zu den Agglomeraten verarbeitet. Sofern das Fasermaterial natürlichen Ursprungs ist, kann es eine gewisse Restfeuchte aufweisen und im übrigen mit bis zu 95 Mass.-% zugesetzt werden.

Als Polymere kommen, wie bereits angedeutet, synthetische und/oder natürliche Polymere oder auch Mischungen derselben in Frage. Besonders vorteilhaft läßt sich das erfindungsgemäße Verfahren bei einer Pulvermischung aus Ligninpulver, wie es in der Zellstoffproduktion anfällt, und Füllstoffen aus natürlichen Fasern einsetzen.

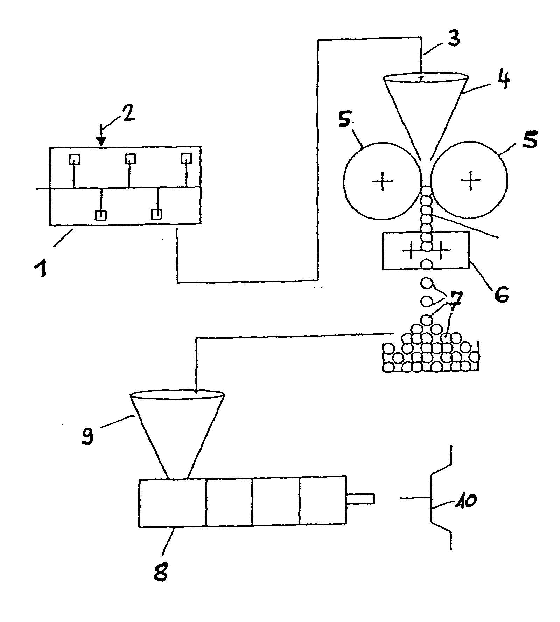

Nachstehend ist die Erfindung anhand einer in der Zeichnung schematisch wiedergegebenen Anlage zur Durchführung des Verfahrens beschrieben.

In einem Mischer 1 werden, wie mit Richtungspfeil 2 angedeutet, ein Polymer oder eine Polymermischung in Pulverform und Füllstoffe in pulvriger bis fasriger Konsistenz aufgegeben und homogen gemischt. Der Mischer 1 kann als Durchlauf- oder Satzmischer arbeiten. Die den Mischer verlassende Mischung wird bei 3 auf einen Trichter 4 oder dergleichen aufgegeben, aus welchem die Pulvermischung dosiert abläuft oder abgezogen wird. Sie gelangt in dem gezeigten Ausführungsbeispiel in den Walzenspalt zwischen zwei Preßwalzen 5 und wird dort rein mechanisch zu einem strangoder bahnförmigen Material (Schülpe) kompaktiert, das anschließend in einer Zerkleinerungsapparatur 6, die beispielsweise umlaufende Schläger oder Messer aufweist, zu rieselfähigen Agglomeraten 7 zerteilt. Bei der Kompaktierung der Pulvermischung im Walzenspalt erwärmt sich diese reibungsbedingt nur unwesentlich, je nach Ausgangstemperatur der Pulvermischung auf etwa 25° bis 40°, so daß jegliche thermische Beeinträchtigungen des Materials und insbesondere ein Plastifizieren der eingesetzten Polymere zuverlässig vermieden wird.

Die rieselfähigen Agglomerate 7 können durch beliebige bekannte thermoplastische Verarbeitungsverfahren, wie Aufgeben auf einen Extruder 8 mit Aufgabetrichter 9 oder eine herkömmliche Spritzgießmaschine und Verschmelzen des Polymers zu einem Kunststoff-Formteil 10, verarbeitet werden.

Ausführungsbeispiele:
1. Es werden 10 Mass.-% Polyethylenpulver und 90 Mass.-% Holzmehl oder kurzgeschnittene Holzfasern homogen gemischt. Die Pulvermischung wird in einer Strang- oder Walzenpresse mit einer Linienkraft zwischen 5 kN/cm und 30 kN/cm zu einem profilierten Strang agglomeriert. Anschließend wird der Strang in einzelne Agglomerate mit einer Partikelgröße zwischen 1 mm und 15 mm zerteilt.
2. Es werden 70 Mass.-% Ligninpulver aus der Celluloseproduktion mit 30 Mass.-% Hanffasern in kurzgeschnittener Form homogen gemischt. Die Pulvermischung wird zwischen zwei Walzen mit einer Linienkraft zwischen 5 kN/cm und 30 kN/cm kompaktiert und das entstehende Material zu rieselfähigen Agglomeraten zerteilt.

## Patentansprüche

1. Verfahren zur Herstellung eines granulatförmigen Zwischenproduktes aus wenigstens einem im wesentlichen pulver- oder partikelförmigen thermoplastischen und/oder thermoelastischen Polymer und im wesentlichen inerten Füllstoffen für die Weiterverarbeitung zu Kunststoff-Formkörpern durch thermoplastische Verarbeitungsverfahren, indem das Polymer und die Füllstoffe gemischt und die Pulvermischung zu einem Granulat mit größerer Korngröße kompaktiert wird, **dadurch gekennzeichnet, daß** die Pulvermischung ohne Plastifizieren des Polymers ausschließlich unter mechanischem Druck zu dem Granulat kompaktiert und während des Kompaktierens auf höchstens 40°C gehalten wird.

2. Verfahren nach Anspruch 1, **dadurch gekennzeichnet, daß** die Pulvermischung mit einer Linienkraft größer 5 kN/cm kompaktiert wird.

3. Verfahren nach Anspruch 1 oder 2, **dadurch gekennzeichnet, daß** die Pulvermischung mit einer Linienkraft kleiner 30 kN/cm kompaktiert wird.

4. Verfahren nach einem der Ansprüche 1 bis 3, **dadurch gekennzeichnet, daß** die Pulvermischung in einer Presse zu geformten Agglomeraten kompaktiert wird.

5. Verfahren nach einem der Ansprüche 1 bis 3, **dadurch gekennzeichnet, daß** die Pulvermischung mittels Walzen kompaktiert wird.

6. Verfahren nach Anspruch 5 **dadurch gekennzeichnet, daß** die Pulvermischung mittels Formwalzen zu geformten Agglomeraten kompaktiert wird.

7. Verfahren nach Anspruch 5 oder 6, **dadurch gekennzeichnet, daß** die Pulvermischung mittels Walzen zu einem flächigen Material kompaktiert und dieses zu den Agglomeraten zerteilt wird.

8. Verfahren nach einem der Ansprüche 1 bis 3, **dadurch gekennzeichnet, daß** die Pulvermischung mittels einer Schneckenpresse zu einem gegebenenfalls profilierten Strang kompaktiert und der Strang zu den Agglomeraten zerteilt wird.

9. Verfahren nach einem der Ansprüche 1 bis 8, **dadurch gekennzeichnet, daß** das pulver- oder partikelförmige Polymer mit zerkleinertem Fasermaterial als Füllstoff gemischt wird.

10. Verfahren nach Anspruch 9, **dadurch gekennzeichnet, daß** Fasermaterial aus Naturstoffen eingesetzt wird.

11. Verfahren nach Anspruch 10 oder 11, **dadurch gekennzeichnet, daß** das Fasermaterial mit einer Partikelgröße von 10 µm bis 10.000 µm eingesetzt wird.

12. Verfahren nach einem der Ansprüche 1 bis 11, **dadurch gekennzeichnet, daß** die Pulvermischung zu Agglomeraten mit einer Partikelgröße von 1 mm bis 10 mm kompaktiert wird.

13. Verfahren nach einem der Ansprüche 1 bis 12, **dadurch gekennzeichnet, daß** das pulver- oder partikelförmige Polymer mit bis zu 95 Mass.-% Füllstoffen bezogen auf die Pulvermischung verarbeitet wird.

14. Verfahren nach einem der Ansprüche 1 bis 13, **dadurch gekennzeichnet, daß** die Pulvermischung im wesentlichen trocken zu den Agglomeraten verarbeitet wird.

15. Verfahren nach einem der Ansprüche 1 bis 14, **dadurch. gekennzeichnet, daß** synthetische und/oder natürliche Polymere oder Mischungen derselben eingesetzt werden.

16. Verfahren nach einem der Ansprüche 1 bis 15, **dadurch gekennzeichnet, daß** Ligninpulver aus der Zellstoffproduktion eingesetzt wird.

## Claims

1. Process for the production of a granular intermediate substance composed of at least one thermoplastic and/or thermoelastic polymer essentially in powder or particle form and essentially inert fillers for further processing to form plastic mouldings by means of thermoplastic manufacturing processes, in that the polymer and the fillers are mixed and the powder mixture is compacted to form a granulate of larger grain size, **characterised in that** the powder mixture is compacted solely under mechanical pressure to form the granulate without plasticising the polymer and is held at 40°C at maximum during compaction.

2. Process according to Claim 1, **characterised in that** the powder mixture is compacted with a linear force greater than 5 kN/cm.

3. Process according to Claim 1 or 2, **characterised in that** the powder mixture is compacted with a linear force less than 30 kN/cm.

4. Process according to one of Claims 1 to 3, **characterised in that** the powder mixture is compacted in a press to form shaped agglomerates.

5. Process according to one of Claims 1 to 3, **characterised in that** the powder mixture is compacted by means of rollers.

6. Process according to Claim 5, **characterised in that** the powder mixture is compacted by means of forming rollers to form shaped agglomerates.

7. Process according to Claim 5 or 6, **characterised in that** the powder mixture is compacted by means of rollers to form a flat material and this is divided into the agglomerates.

8. Process according to one of Claims 1 to 3, **characterised in that** the powder mixture is compacted by means of a worm extruder to form a possibly profiled strand and the strand is divided into the agglomerates.

9. Process according to one of Claims 1 to 8, **characterised in that** the polymer in powder or particle form is mixed with crushed fibre material as filler.

10. Process according to Claim 9, **characterised in that** fibre material of natural substances is used.

11. Process according to Claim 10 or 11, **characterised in that** the fibre material is used with a particle size of 10 µm to 10 000 µm.

12. Process according to one of Claims 1 to 11, **characterised in that** the powder mixture is compacted to form agglomerates with a particle size of 1 mm to 10 mm.

13. Process according to one of Claims 1 to 12, **characterised in that** the polymer in powder or particle form is processed with up to 95% by mass of fillers calculated on the basis of the powder mixture.

14. Process according to one of Claims 1 to 13, **characterised in that** the powder mixture is processed essentially dry to form the agglomerates.

15. Process according to one of Claims 1 to 14, **characterised in that** synthetic and/or natural polymers or mixtures thereof are used.

16. Process according to one of Claims 1 to 15, **characterised in that** lignin powder from pulp production is used.

## Revendications

1. Procédé de fabrication d'un produit intermédiaire granulé à partir d'au moins un polymère thermoplastique et/ou thermoélastique essentiellement pulvérulent ou particulaire, et de charges essentiellement inertes, soumis à un traitement ultérieur pour former des corps moulés en matière plastique à l'aide d'un procédé de traitement thermoplastique, le polymère et les charges étant mélangés et le mélange pulvérulent étant compacté sous forme de granulés ayant une dimension de particules plus importante,
**caractérisé en ce que**
le mélange pulvérulent est compacté sous forme granulaire exclusivement sous pression mécanique, sans plastifier le polymère, et est maintenu au maximum à 40°C pendant le compactage.

2. Procédé selon la revendication 1,
**caractérisé en ce que**
le mélange pulvérulent est compacté avec une force linéaire supérieure à 5 kN/cm.

3. Procédé selon la revendication 1 ou 2,
**caractérisé en ce que**
le mélange pulvérulent est compacté avec une force linéaire inférieure à 30 kN/cm.

4. Procédé selon l'une des revendications 1 à 3,
**caractérisé en ce que**
le mélange pulvérulent est compacté en agglomérats moulés dans une presse.

5. Procédé selon l'une des revendications 1 à 3,
**caractérisé en ce que**
le mélange pulvérulent est compacté au moyen de cylindres.

6. Procédé selon la revendication 5,
**caractérisé en ce que**
le mélange pulvérulent est compacté en agglomérats moulés au moyen de cylindres de moulage.

7. Procédé selon la revendication 5 ou 6,
**caractérisé en ce que**
le mélange pulvérulent est compacté au moyen de cylindres en un matériau plat divisé en agglomérats.

8. Procédé selon l'une des revendications 1 à 3,
**caractérisé en ce que**
le mélange pulvérulent est compacté en une barre éventuellement profilée au moyen d'une extrudeuse et la barre est divisée en agglomérats.

9. Procédé selon l'une des revendications 1 à 8,
**caractérisé en ce que**
le polymère pulvérulent ou particulaire est mélangé avec une charge de matériau fibreux broyé.

10. Procédé selon la revendication 9,
**caractérisé en ce qu'**
on utilise un matériau fibreux composé de substances naturelles.

11. Procédé selon la revendication 10 ou 11,
**caractérisé en ce qu'**
on utilise un matériau fibreux ayant une taille de particules comprise entre 10 µm et 10 000 µm.

12. Procédé selon l'une des revendications 1 à 11,
**caractérisé en ce que**
le mélange pulvérulent est compacté en agglomérats ayant une taille de particules comprise entre 1 mm et 10 mm.

13. Procédé selon l'une des revendications 1 à 12,
**caractérisé en ce que**
le polymère pulvérulent ou particulaire est traité avec jusqu'à 95 % en masse de charges par rapport au mélange pulvérulent.

14. Procédé selon l'une des revendications 1 à 13,
**caractérisé en ce que**
le mélange pulvérulent est traité essentiellement à sec en agglomérats.

15. Procédé selon l'une des revendications 1 à 14,
**caractérisé en ce qu'**
on utilise des polymères synthétiques et/ou naturels ou des mélanges de ceux-ci.

16. Procédé selon l'une des revendications 1 à 15,
**caractérisé en ce qu'**
on utilise une poudre de lignine provenant de la production de cellulose.
